# EUROPEAN PATENT SPECIFICATION

(11) **EP 2 278 722 B1**
(45) Date of publication and mention of the grant of the patent: **05.03.2014**
(21) Application number: 10075350.8
(22) Date of filing: 19.10.2007
(51) Int. Cl.: H04B 1/38

(54) **Enhanced cigarette lighter adapter**
VERBESSERTER ZIGARETTENANZÜNDER-ADAPTER
ADAPTATEUR D'ALLUME-CIGARE AMÉLIORÉ

(43) Date of publication of application: 26.01.2011
(62) Divisional of application: 07819235.8
(73) Proprietor: TomTom International B.V., 1017 CT Amsterdam (NL)
(72) Inventor: Groenhuizen, Lucien, 1335 KD Almere (NL); Sayed, Ashley, London SW9 9BB (GB)
(74) Representative: Dobson, Adrian

(56) References cited:
- WO-A-92/14328
- WO-A-2005/020453

## Description

This invention relates to an enhanced cigarette lighter adapter (CLA) in which electronics are provided which may be powered from a vehicle having a cigarette lighter. More specifically, the present invention relates to an enhanced CLA having electronics therein and which is capable of communicating with in-car apparatus, either wirelessly or through a wired connection thereto.

### BACKGROUND OF THE INVENTION

The use of CLAs to provide power to a wide variety of apparatus is known. Typically, such CLAs are provided with a body portion and a barrel portion on which are provided the electrical contacts. A first contact pin protrudes from the end of the barrel portion, and one or more second contacts are provided on the cylindrical periphery of the barrel portion such that when the CLA is inserted into the cigarette lighter of a vehicle, an electrical circuit, including whatever electronics are provided inside the CLA, is completed, and power can be drawn from the vehicle battery. Usually, vehicle batteries provide a 12V DC power source, whereas the majority of electronic apparatus which might be used in a car will require slightly different, albeit still low, voltage. Examples of apparatus include laptop computers, in-car DVD players, mobile telephones, and in-car or portable navigation devices, with which this invention is primarily concerned. Power is provided to the apparatus by means of a cable which is electrically connected internally to the electronics inside the CLA, and which emerges from the rear or side of the body of the CLA, ultimately terminating in a suitable connector.

Personal navigation devices or PNDs are being widely adopted by drivers and owners of vehicles throughout the world. The navigation assistance provided by such devices is facilitated by on-board processing equipment which accurately (within about 10m) determines the position of the PND on the surface of the earth, and associates that position with digitized map data provided in memory accessible to the PND, usually either in a small memory card, or on-board RAM or ROM. As is known, PNDs can receive user input of a desired destination in a variety of ways, whereupon the PND calculates a best route according to various algorithms and user requirements and then displays a relevant portion of a map along with a route to be navigated. Typically the PND will include an internal battery, but as most PNDs include a display screen for real-time display of map data as the vehicle moves, they are relatively power-hungry devices and can only be used on battery power alone for short journeys.

CLA adapters which provide power for PNDs, and for re-charging the batteries within them, are known. Currently, CLAs are aftermarket accessories which provide only power to the PND thereby having limited market value, especially when competing with home chargers and other charging devices. Accordingly, a need exists in the art for a more cost effective, functional and consumer-appealing CLA.

Published US patent application US2005/0054400 discloses a CLA in which is in the traditional form having a barrel portion with contacts and a body. Within the body there is further provided a first circuit for power management, regulation, and delivery to a first output, and one or more further circuits, powered from the contacts, capable communicating in a wireless local area network (WLAN). An antenna is further provided in the body, the signal from said antenna being delivered to the WLAN circuitry, a separate output for which is also provided. Both outputs are in the form of two or more cables emerging from the rear of the body of the CLA, for separately providing a recharging power source, and telecommunications data derived from the signal received by the antenna within the device.

The international patent application WO2005020453 by Motorola Inc. discloses a vehicular adapter system with wireless local area network (WLAN) capabilities. The adapter system includes an adapter having a WLAN module wherein the module can communicate with other WLAN-enabled devices.

A further example of prior art, WO9214328 by Profinor SA, discloses a telecommunication equipment comprising a mobile phone connected to a hands-free device and to a cigarette lighter supply plug.

Document JP 2006 157722 discloses a CLA adopter in which a mobile phone can be placed.

### SUMMARY OF THE INVENTION

According to the present invention, there is provided a CLA comprising a body and a barrel portion extending therefrom, said barrel portion including a first and second contacts respectively connectable within a vehicle cigarette lighter to be powered therefrom, said CLA being additionally provided with at least one primary electronic circuit within the body thereof, connected directly or indirectly to said contacts, said CLA including an antenna component in electrical communication with said primary electronic circuit which primarily derives a source of power from said contacts,
Characterized in that
said CLA further includes a subscriber identity module (SIM) capable of receiving a SIM card and being in electrical communication with said primary electronic circuit, and a secondary wireless transceiver circuit in electrical communication with said primary electronic circuit and capable of wirelessly communicating
- the antenna signal,
- an electronically processed version thereof,
- data derived from the electronic processing thereof
to a remote device.

In an embodiment, an on-board source of power is provided as an alternative to the source of power derived through the contacts.

Preferably, the alternative power source is in the form of a (preferably) rechargeable, battery, such as a Lithium Ion battery, a nickel-metal-halide battery, or the like.

In a preferred arrangement, the electronic circuit also includes a recharging electronics which are capable of recharging the battery when a source of power is being provided through the contacts from a live vehicle cigarette lighter.

In an alternative arrangement, the CLA includes a secondary electronic circuit, which is also directly or indirectly connected to said contacts, as well as to the battery, such being adapted to effect a recharging function on said battery when a source of power is being derived from said contacts.

In a most preferred arrangement, CLA further includes a voltage switching regulator, which may be included in or be separate from the secondary electronic circuit.

In a most preferred arrangement, the primary electronic circuit is a wireless telecommunications processing circuit, for example capable of processing at least one of the following telecommunications standards or protocols: GSM, GPRS, EDGE, HSDPA, CDMA, WCDMA, WiFi, WiMax, Bluetooth. Most preferably, the electronic circuit is a wireless modem.

Preferably, the CLA output is a cable in electrical communication with said electronic circuit.

Most preferably, said CLA is provided with one or more LEDs indicative of one of the charging of the battery, the existence of a source of power for the CLA from a live vehicle cigarette lighter, and the processing of signals received by the antenna.

Preferably, the CLA is provided with at least two LEDs, preferably of different colours, a first LED providing an indication of the existence of a source of power for the CLA, and a second LED for providing an indication of the processing of signals received by the antenna.

In a preferred arrangement, the electronic circuit is capable of amalgamating the antenna signal, an electronically processed version thereof, or a data signal derived therefrom, with said power signal, and delivering both in conjunction to said output.

In a most preferred arrangement, the electronic circuit is a quad- or tri-band GPRS modem which is capable of extracting traffic congestion data from the signal received by the antenna, and the output is a serial output, such as a USB socket or cable, or a UART socket or cable, any of which can be used to deliver both power and data to a portable navigation device.

By providing the antenna and associated processing electronics in the CLA, the GPRS modem and related elements may be removed from the PND thereby saving engineering and manufacturing costs along with providing the industrial designer with fewer components to squeeze into the PND thereby opening the PND to other designs.

In a preferred arrangement, the modem is capable of establishing a wireless connection using at least one of a subscriber identifier (IMSI), a modem identifier (IMEI), and an identifier of a PND (PND UID).

In a further preferred arrangement, the CLA further includes power control electronics.

Most preferably, the antenna is a substantially flat component affixed to the inside surface of a part of the body of the CLA.

In a particularly preferred embodiment, the CLA is provided with vents in its body through which hot air, generated as a result of contact with the hot-working electronic circuit(s) and other electronic circuits, can escape.

Most preferably, the CLA includes a first electronic circuit which receives a signal from the antenna, and one or more second electronic circuits for providing at least one of power management, regulation, switching and recharging functions, wherein at least one of the second circuits is separate from the first electronic circuit but in electrical communication therewith, and wherein said one or more second electronic circuits is disposed proximate the vents provided in the body of the CLA.

Most preferably the vents are provided toward the front of the body of the CLA, with the battery, primary electronic circuit being provided towards the rear of the body, remote from the barrel portion. This arrangement is advantageous because the power management, regulation, switching and recharging functions which the CLA may have, are performed by the vented electronic circuitry, such functions (and circuitry) typically generating far more heat than the first electronic circuitry which processes the antenna signals. Accordingly, this segregation is an efficient and safe arrangement of components within the CLA.

In a most preferred arrangement, the one more secondary electronic circuits is provided on a pair of PCBs disposed adjacent one another inside a forward portion of the body of the CLA, each said PCB being additionally disposed proximate a vent on the outside of the CLA.

A specific description of the invention will now be described by way of example, with reference to the following drawings:

### BRIEF DESCRIPTION OF THE DRAWINGS

Figure 1 shows an exploded perspective view of a CLA of a type suitable for use with the present invention,
Figures 2A, 2B show different perspective views of the CLA of Fig. 1 to which components have been added,
Figure 3A provides a schematic circuit diagram of a CLA of a first aspect of present invention,
Figure 3B provides a schematic circuit diagram of a CLA of a second aspect of present invention,
Figure 4 shows a perspective view of a CLA having an antenna therein,

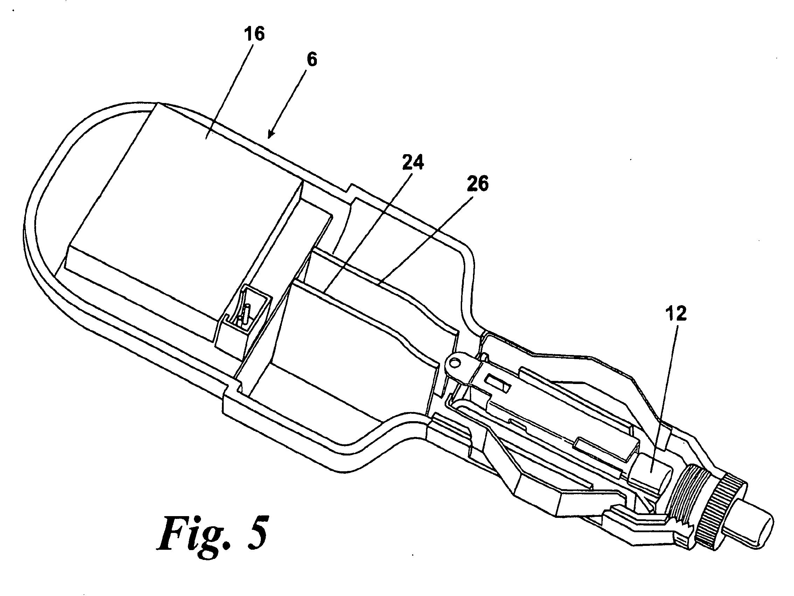

Figure 5 shows a perspective view of the CLA of Figure 4 in partially assembled state,
Figure 6 shows the CLA of Figures of 4 and 5 in a further assembled state, and
Fig. 7 shows a CLA in completed condition with LEDs visible at the rear.

### DETAILED DESCRIPTION OF THE INVENTION

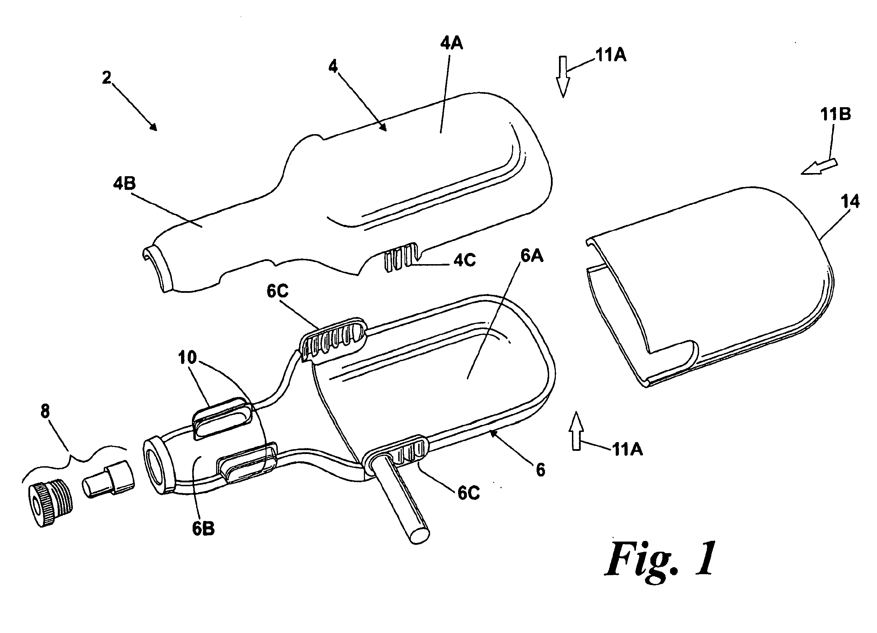

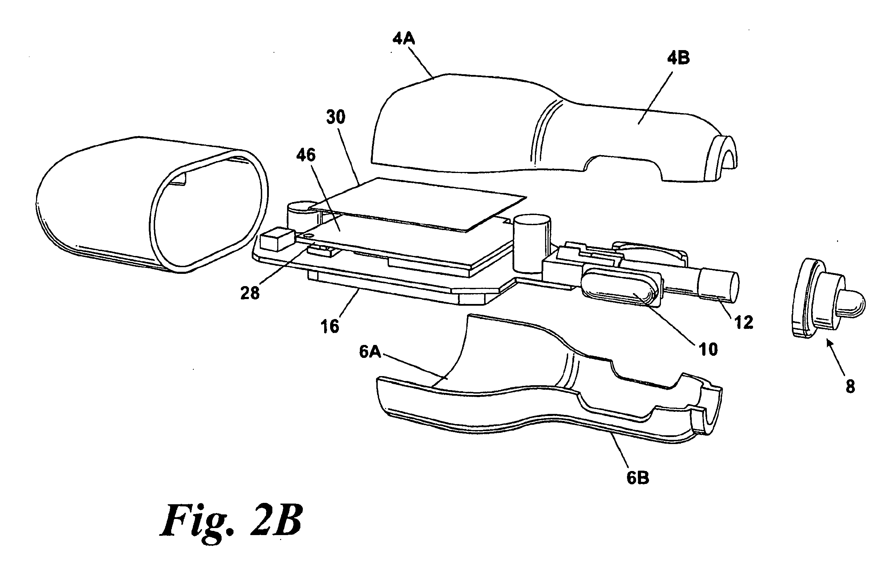

Referring firstly to Figure 1, there is shown a CLA generally indicated at 2 consisting of respective upper and lower casing halves 4, 6, each having a body part 4A, 6A and barrel part 4B, 6B. Together the casing halves, when assembled define a body with a cavity in which the electronics of the CLA may be provided, and a barrel part in which a first contact 8 and second contacts 10 are, usually springingly, mounted, and connected in turn through a fuse 12 (shown in Figure 2B) to the electronics of the device.

Assembly of the CLA is completed in stages, with the various components being inserted into one or both of the casing halves and electrically connected together, whereupon the casing halves are brought together in snap-fitting manner as indicated by arrows 11A, and finally a cover 14 is slid axially as indicated at 11B over the assembled casing halves to encapsulate the majority of the body of the CLA therein. As can be seen from the figure, each casing half is provided with vent formations 4C, 6C which cooperate or otherwise interengage when the casing halves are brought together to define vents through which hot air generated inside the CLA during operation can escape. It is also worth mentioning, and advantageous, that the vents are provided opposite one another so that air can flow through the device in the most direct manner possible.

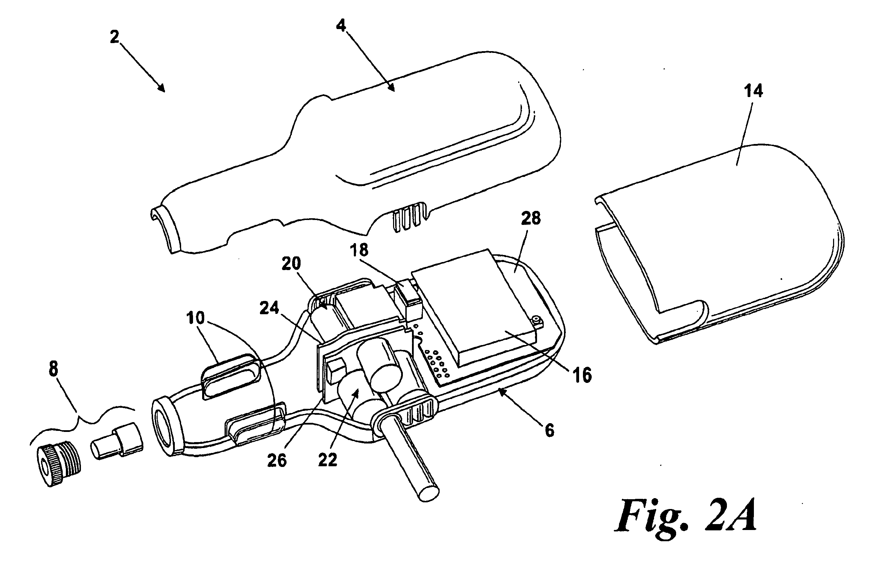

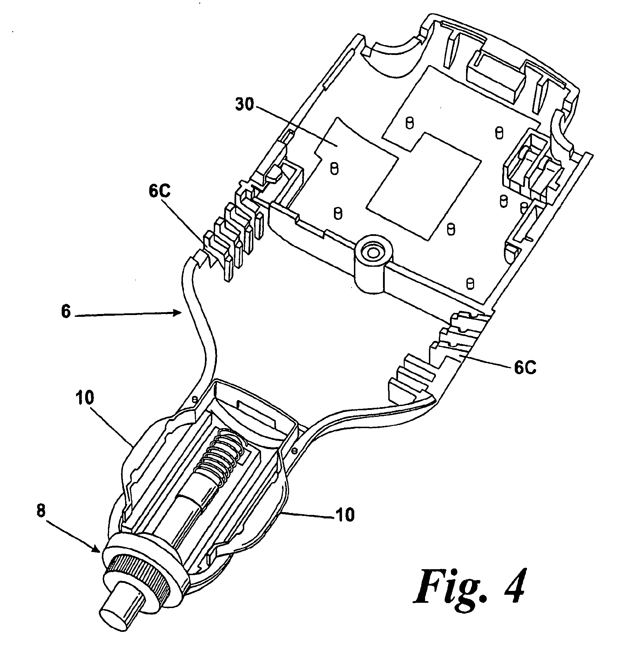

As can be seen from Figure 2A, a rechargeable battery 16 is provided with an associated connector 18, which is in electrical communication with one or more secondary electronic circuits 20, 22, which in this embodiment are mounted on separated but adjacent printed circuit boards (PCBs) 24, 26 respectively. Such secondary electronic circuits provide such functions as power management, control, switching, regulation, and re-charging. Additionally, the battery 16 and associated connector are also mounted on a suitable PCB 28, beneath which is mounted a substantially planar antenna 30, as shown in Figures 2B and 4.

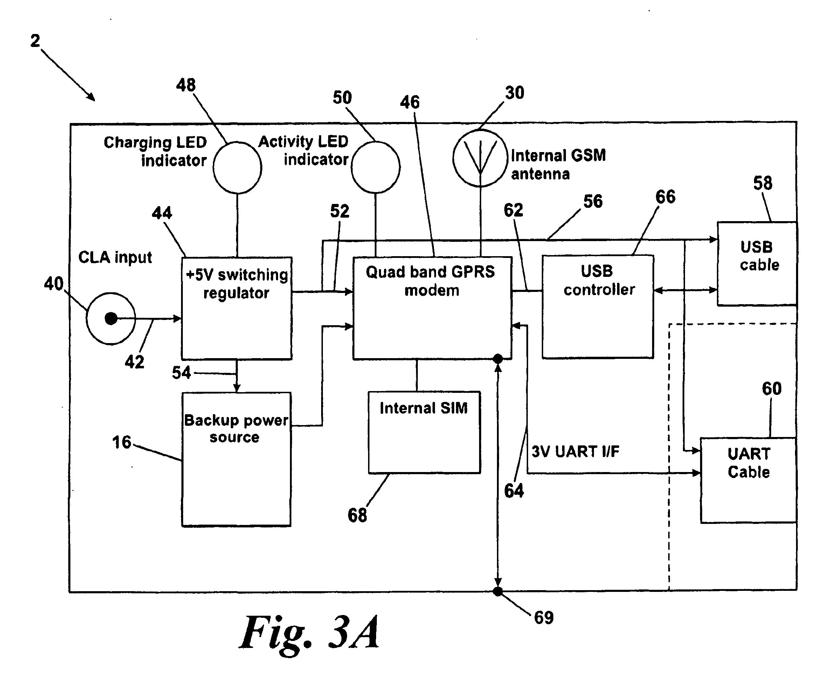

Referring now to Figure 3A, a schematic block diagram of CLA is provided. The on-board battery 16 is shown, and the contacts are schematically represented at 40, the source of power derived therefrom being represented at 42 and feeding a switching regulator 44 which operatively reduces the traditional DC car battery voltage from 12V DC to 5VC DC. A quad band GPRS modem or other wireless telecommunications processing device is provided at 46, and both regulator 44 and modem 46 are connected to LEDs 48, 50 respectively, which are ideally of different colours and demonstrate the charging of the battery 16 and/or power supply through the contacts 42 on the one hand, and the processing activity of the modem 46 respectively. It is to be noted that the voltage regulator is in electrical communication with both modem 46 and battery 16 at 52 and 54 respectively, and is capable of providing a source of power to both. Furthermore, the output of the regulator 44 is also, in this embodiment, directly coupled at 56 to both a USB cable output 58 and optionally a conventional UART (universal asynchronous receiver/transmitter) cable output 60.

It should be mentioned that the presence of both a USB cable output and a UART cable output is unlikely to ever be implemented in practice as only one of these outputs is likely ever to be required, but the Figure demonstrates the possibilities for connection. Additionally, it should be mentioned that the in the embodiment shown, a power signal is fed directly from the regulator 44 to both - in an alternative embodiment, the modem 46 may additionally include basic power management and/or transfer functions such that the direct connections 56 are not required, a power signal being delivered to outputs 58, 60 in conjunction with the data signals complying with the particular communications standards. Such signals are provided by the modem 46, at 62 or 64as the case may be, and in the case that a USB cable output is provided, an additional USB controller 66 may be provided to ensure USB signals comply with the USB communications standard.

A SIM module 68, capable of receiving a conventional SIM card, is provided in communication with the modem 46 for enabling subscription to a particular wireless telecommunications network provided by a service provider by whom the SIM card is issued, and of course, an antenna 30 provides a means for collecting wireless signals being transmitted through space, said antenna again communicating with said modem 46 to deliver a useful signal thereto. Additionally, a reset facility in the form of a switch 68 or the like which causes a soft and/or hard reset of the modem 46 may be provided. Such facility may also be extended to the regulator 44 if required.

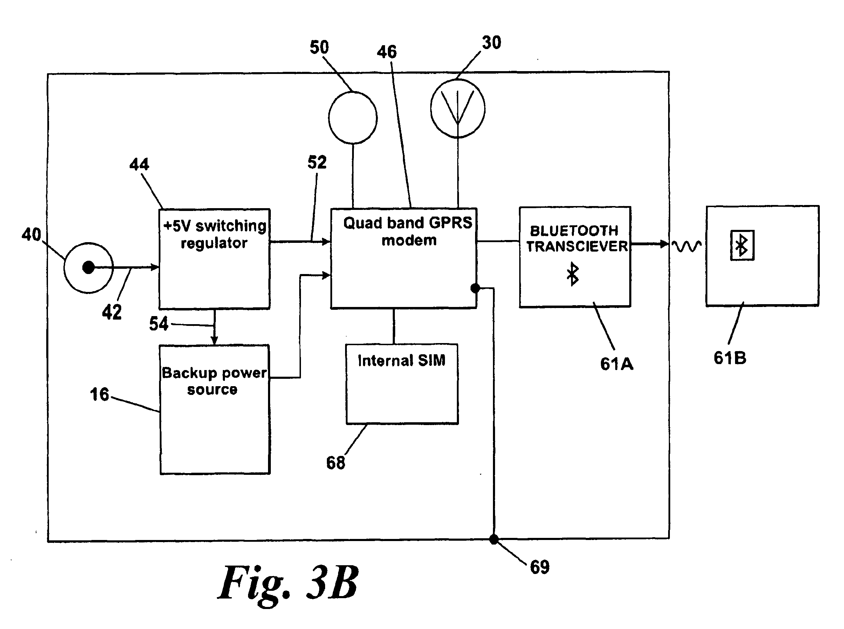

Referring to Figure 3B, an aspect of the present invention is schematically illustrated, like reference numerals be employed to those of Figure 3A to identify like components. The important distinction in this aspect of the invention is that the battery 16 is optional, the SIM module 68 provides an authorization means for the modem 46 to enable the receipt of signals from an ambient mobile telecommunications service, and the output of the modem, whether the basic antenna signal, an electronically processed version thereof, or data extracted therefrom is delivered to a wireless transceiver device 61A, which may be ideally be a Bluetooth® transceiver employed for wireless communication with a remote device 61B. In a most preferred arrangement, both modem 46 and transceiver 61 A are provided with a source of power from the contacts 40, or if provided, from the optional battery 16.

A block diagram is provided of the components provided within CLA 2 of the present invention. The on-board battery 16 is shown, and the contacts are schematically represented at 40, the source of power derived therefrom being represented at 42 and feeding a switching regulator 44 which operatively reduces the traditional DC car battery voltage from 12V DC to 5VC DC. A quad band GPRS modem or other wireless telecommunications processing device is provided at 46, and both regulator 44 and modem 46 are connected to LEDs 48, 50 respectively, which are ideally of different colours and demonstrate the charging of the battery 16 and/or power supply through the contacts 42 on the one band, and the processing activity of the modem 46 respectively. It is to be noted that the voltage regulator is in electrical communication with both modem 46 and battery 16 at 52 and 54 respectively, and is capable of providing a source of power to both. Furthermore, the output of the regulator 44 is also, in this embodiment, directly coupled at 56 to both a USB cable output 58 and optionally a conventional UART (universal asynchronous receiver/transmitter) cable output 60.

It should be mentioned that the presence of both a USB cable output and a UART cable output is unlikely to ever be implemented in practice as only one of these outputs is likely ever to be required, but the Figure demonstrates the possibilities for connection. Additionally, it should be mentioned that the in the embodiment shown, a power signal is fed directly from the regulator 44 to both - in an alternative embodiment, the modem 46 may additionally include basic power management and/or transfer functions such that the direct connections 56 are not required, a power signal being delivered to outputs 58, 60 in conjunction with the data signals complying with the particular communications standards. Such signals are provided by the modem 46, at 62 or 64as the case may be, and in the case that a USB cable output is provided, an additional USB controller 66 may be provided to ensure USB signals comply with the USB communications standard.

A SIM module 68, capable of receiving a conventional SIM card, is provided in communication with the modem 46 for enabling subscription to a particular wireless telecommunications network provided by a service provider by whom the SIM card is issued, and of course, an antenna 30 provides a means for collecting wireless signals being transmitted through space, said antenna again communicating with said modem 46 to deliver a useful signal thereto. Additionally, a reset facility in the form of a switch 68 or the like which causes a soft and/or hard reset of the modem 46 may be provided. Such facility may also be extended to the regulator 44 if required.

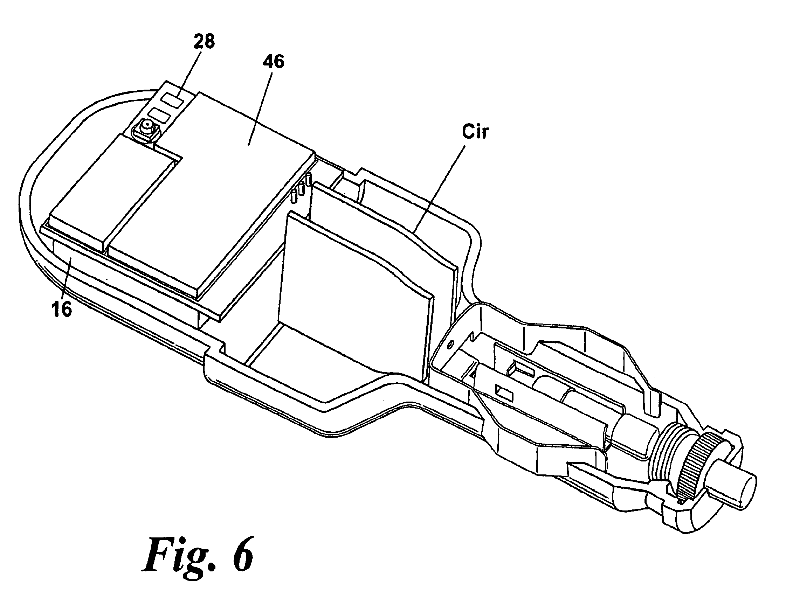

Referring to Figure 6, it can be seen that the GPRS modem 46, which is now available as an "off the-shelf' type component, is mounted in adjacent relationship with the battery 16, optionally to the alternate side of the PCB 28 on which the battery is mounted.

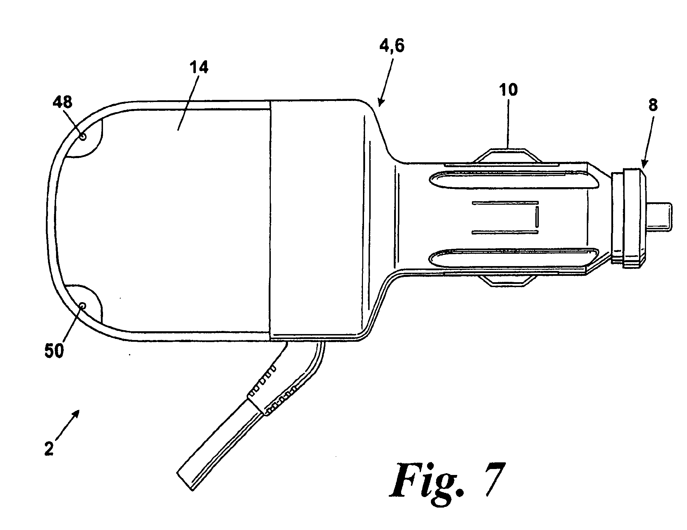

The assembled CLA is shown in Figure 7, and the LEDs 48, 50, are either made visible by virtue of the cover 14 having translucent or less opaque portions in the regions proximate the LED locations therewithin, or by having suitable apertures thereat.

The scope of the invention is defined in the appended claims.

## Claims

1. A cigarette lighter adapter (2) comprising a body (4A, 6A) and a barrel portion (4B, 6B) extending therefrom, said barrel portion including a first and second contacts (8, 10) respectively connectable within a vehicle cigarette lighter to be powered therefrom, said cigarette lighter adapter being additionally provided with at least one primary electronic circuit (46) within the body thereof, connected directly or
indirectly to said contacts, said cigarette lighter adapter including an antenna component (30) in electrical communication with said primary electronic circuit which primarily derives a source of power from said contacts,
**Characterized in that**
said cigarette lighter adapter further includes a subscriber identity module SIM (68) capable of receiving a SIM card and being in electrical communication with said primary electronic circuit, and a secondary wireless transceiver circuit (61A) in electrical communication with said primary electronic circuit and capable of wirelessly communicating
- the antenna signal,
- a electronically processed version thereof,
- data derived from the electronic processing thereof
to a remote device.

2. A cigarette lighter adapter (2) according to claim 1 wherein an on-board source of power (16) is provided as an alternative to the source of power derived through the contacts (8, 10).

3. A cigarette lighter adapter according to claim 1 or 2 further including one or more tertiary electronic circuits (44) providing at least one of power management, control, regulation, switching and recharging functions, wherein at least one of the tertiary electronic circuits is separate from the primary electronic circuit (46) and secondary electronic circuits (61A) but in electrical communication with at least one thereof

4. A cigarette lighter adapter according to claim 3 when dependent on claim 2 wherein at least one tertiary electronic circuits (44) is provided to implement a recharging function, said at least one tertiary electronic circuit being in electrical communication with both said contacts (8, 10) and said on-board power source (16) and re-charging the latter when a source of power is derived through the contacts.

5. A cigarette lighter adapter (2) according to any preceding claim wherein the primary electronic circuit (46) is a wireless telecommunications protocol processing circuit.

6. A cigarette lighter adapter (2) according to any claim 5 wherein the primary electronic circuit (46) is a wireless modem.

7. A cigarette lighter adapter (2) according to either claim 5 or 6 wherein the wireless telecommunications protocol processing circuit (46) is adapted for at least one of the following wireless telecommunications protocols: GSM, GPRS, EDGE, HSDPA, CDMA, WCDMA, WiFi, WiMax.

8. A cigarette lighter adapter (2) according to any preceding claim wherein the cigarette lighter adapter output is a cable in direct or indirect electrical communication with said primary electronic circuit (46).

9. A cigarette lighter adapter (2) according to any preceding claim further provided with one or more LEDs (48, 50) indicative of at least one of: the charging of an on-board power source (16), the existence of a source of power for the cigarette lighter adapter from a live vehicle cigarette lighter, and the processing of signals within the primary electronic circuit (46) received by the antenna (30).

10. A cigarette lighter adapter (2) according to claim 9 wherein cigarette lighter adapter is provided with at least two LEDs (48, 50), a first LED providing an indication of the existence of a source of power for the cigarette lighter adapter, and a second LED for providing an indication of the processing of signals received by the antenna (30).

11. A cigarette lighter adapter (2) according to claim 10 wherein the LEDs (48, 50) are of different colours.

12. A cigarette lighter adapter (2) according to any preceding claim wherein the antenna (30) is a substantially flat component affixed to the inside surface of a part of the body (4A, 6A) of the cigarette lighter adapter.

13. A cigarette lighter adapter (2) according to any preceding claim further provided with vents (4C, 6C) in the body (4A, 6A) through which hot air, generated as a result of contact with the hot-working electronic circuits, can escape.

14. A cigarette lighter adapter (2) according to claim 13, wherein the vents (4C, 6C) are provided toward the front of the body proximate the barrel portion (48, 6B) of the cigarette lighter adapter, said primary electronic circuit (46) being provided towards the rear of the body, remote from the barrel portion, and said one or more secondary electronic circuits (20, 22, 44) being also provided toward the front of the body of said cigarette lighter adapter adjacent said vents.

15. A cigarette lighter adapter according to claim 14 wherein the one more secondary electronic circuits (20, 22, 44) is provided on a pair of PCBs (24, 26) disposed adjacent one another inside a forward portion of the body (4A, 6A) of the cigarette lighter adapter, each said PCB being additionally disposed proximate a vent (4C, 6C) on the outside of the cigarette lighter adapter.

16. A cigarette lighter adapter (2) according to any preceding claim wherein the output (58, 60) is a serial output selected from one of: a USB connector or cable, a UART connector or cable.

17. A cigarette lighter adapter (2) according to any preceding claim wherein the primary electronic circuit (46) is capable of establishing a wireless connection using at least one of a subscriber identifier (IMSI), a modem identifier (IMEI), and an identifier of a PND (PND UID).

## Patentansprüche

1. Zigarettenanzünderadapter (2), der einen Körper (4A, 6A) und einen Zylinderabschnitt (4B, 6B) umfasst, der sich davon erstreckt, wobei der Zylinderabschnitt einen ersten und einen zweiten Kontakt (8, 10) umfasst, die jeweils innerhalb eines Fahrzeugzigarettenanzünders verbunden werden können, der davon mit Strom zu versorgen ist, wobei der Zigarettenanzünderadapter zusätzlich mit mindestens einer primären elektronischen Schaltung (46) innerhalb des Körpers davon versehen ist, die direkt oder indirekt mit den Kontakten verbunden ist, wobei der Zigarettenanzünderadapter ein Antennenbauteil (30) umfasst, das elektrisch mit der primären elektronischen Schaltung verbunden ist, die primär eine Stromquelle von den Kontakten ableitet,
**dadurch gekennzeichnet, dass**:
der Zigarettenanzünderadapter ferner ein Teilnehmeridentifikationsmodul (Subscriber Identity Module - SIM) (68), das in der Lage ist, eine SIM-Karte aufzunehmen und elektrisch mit der primären elektronischen Schaltung verbunden ist, und eine sekundäre drahtlose Sender-Empfängerschaltung (61 A) umfasst, die elektrisch mit der primären elektronischen Schaltung verbunden ist und in der Lage ist:
- das Antennensignal,
- eine elektronisch verarbeitete Version davon,
- Daten, die von der elektronischen Verarbeitung davon abgeleitet werden,
drahtlos an ein entferntes Gerät zu übertragen.

2. *Zigarettenanzünderadapter (2) nach Anspruch 1, wobei eine fahrzeugseitige Stromquelle (16) als eine Alternative zur Stromquelle bereitgestellt wird, die durch die Kontakte (8, 10) abgeleitet wird.

3. Zigarettenanzünderadapter nach Anspruch 1 oder 2, der ferner eine oder mehrere tertiäre elektronische Schaltungen (44) umfasst, die mindestens eines von Energieverwaltungs-, Steuerungs-, Regelungs-, Schalt- und Wiederaufladefunktionen bereitstellen, wobei mindestens eine der tertiären elektronischen Schaltungen von der primären elektronischen Schaltung (46) und der sekundären elektronischen Schaltung (61A) getrennt aber mit mindestens einer davon elektrisch verbunden ist.

4. Zigarettenanzünderadapter nach Anspruch 3, wenn abhängig von Anspruch 2, wobei mindestens eine tertiäre elektronische Schaltung (44) bereitgestellt ist, um eine Wiederaufladefunktion auszuführen, wobei die mindestens eine tertiäre elektronische Schaltung mit beiden der Kontakte (8, 10) und der fahrzeugseitigen Stromquelle (16) elektrisch verbunden ist und die letztere wiederauflädt, wenn eine Stromquelle durch die Kontakte abgeleitet wird.

5. Zigarettenanzünderadapter (2) nach einem der vorhergehenden Ansprüche, wobei die primäre elektronische Schaltung (46) eine drahtlose Telekommunikationsprotokoll-Verarbeitungsschaltung ist.

6. Zigarettenanzünderadapter (2) nach Anspruch 5, wobei die primäre elektronische Schaltung (46) ein drahtloses Modem ist.

7. Zigarettenanzünderadapter (2) nach Anspruch 5 oder 6, wobei die drahtlose Telekommunikationsprotokoll-Verarbeitungsschaltung (46) für mindestens eines der folgenden drahtlosen Telekommunikationsprotokolle angepasst ist: GSM, GPRS, EDGE, HSDPA, CDMA, WCDMA, WiFi, WiMax.

8. Zigarettenanzünderadapter (2) nach einem der vorhergehenden Ansprüche, wobei der Zigarettenanzünderadapterausgang ein Kabel ist, das direkt oder indirekt elektrisch mit der primären elektronischen Schaltung (46) verbunden ist.

9. Zigarettenanzünderadapter (2) nach einem der vorhergehenden Ansprüche, der ferner mit einer oder mehreren LEDs (48, 50) versehen ist, die mindestens eines von Folgendem anzeigen: das Laden einer fahrzeugseitigen Stromquelle (16), das Vorhandensein einer Stromquelle für den Zigarettenanzünderadapter von einem unter Strom stehenden Fahrzeugzigarettenanzünder und das Verarbeiten von Signalen, die durch die Antenne (30) empfangen werden, innerhalb der primären elektronischen Schaltung (46).

10. Zigarettenanzünderadapter (2) nach Anspruch 9, wobei der Zigarettenanzünderadapter mit mindestens zwei LEDs (48, 50) versehen ist, einer ersten LED, die eine Anzeige des Vorhandenseins einer Stromquelle für den Zigarettenanzünderadapter bereitstellt, und einer zweiten LED zum Bereitstellen einer Anzeige der Verarbeitung von Signalen, die von der Antenne (30) empfangen werden.

11. Zigarettenanzünderadapter (2) nach Anspruch 10, wobei die LEDs (48, 50) verschiedene Farben aufweisen.

12. Zigarettenanzünderadapter (2) nach einem der vorhergehenden Ansprüche, wobei die Antenne (30) ein im Wesentliches flaches Bauteil ist, das an der Innenfläche eines Teils des Körpers (4A, 6A) des Zigarettenanzünderadapters befestigt ist.

13. Zigarettenanzünderadapter (2) nach einem der vorhergehenden Ansprüche, der ferner mit Entlüftungsöffnungen (4C, 6C) in dem Körper (4A, 6A) versehen ist, durch die heiße Luft, die als Ergebnis des Kontakts mit den heißen elektronischen Schaltungen erzeugt wird, austreten kann.

14. Zigarettenanzünderadapter (2) nach Anspruch 13, wobei die Entlüftungsöffnungen (4C, 6C) in Richtung der Vorderseite des Körpers in der Nähe des Zylinderabschnitts (4B, 6B) des Zigarettenanzünderadapters bereitgestellt sind, wobei die primäre elektronische Schaltung (46) in Richtung des Hinterteils des Körpers von dem Zylinderabschnitt entfernt bereitgestellt ist, und die eine oder die mehreren sekundären elektronischen Schaltungen (20, 22, 44) auch in Richtung der Vorderseite des Körpers des Zigarettenanzünderadapters den Entlüftungsöffnungen benachbart bereitgestellt ist/sind.

15. Zigarettenanzünderadapter nach Anspruch 14, wobei die eine oder mehreren sekundäre/n elektronische/n Schaltung/en (20, 22, 44) auf einem Paar Leiterplatten (24, 26) bereitgestellt ist/sind, die einander benachbart innerhalb eines Vorderabschnitts des Körpers (4A, 6A) des Zigarettenanzünderadapters angeordnet sind, wobei jede der Leiterplatten zusätzlich in der Nähe einer Entlüftungsöffnung (4C, 6C) an der Außenseite des Zigarettenanzünderadapters angeordnet ist.

16. Zigarettenanzünderadapter (2) nach einem der vorhergehenden Ansprüche, wobei der Ausgang (58, 60) ein serieller Ausgang ist, der von einem von Folgendem ausgewählt ist: ein USB-Verbinder oder -kabel, ein UART-Verbinder oder -kabel.

17. Zigarettenanzünderadapter (2) nach einem der vorhergehenden Ansprüche, wobei die primäre elektronische Schaltung (46) in der Lage ist, eine drahtlose Verbindung unter Verwendung von mindestens einer Teilnehmerkennung (IMSI), einer Modemkennung (IMEI) und einer Kennung eines PND (PND UID) herzustellen.

## Revendications

1. Adaptateur d'allume-cigare (2) comprenant un corps (4A, 6A) et une portion de cylindre (4B, 6B) s'étendant de celui-ci, ladite portion de cylindre comprenant un premier et un second contact (8, 10) qui peuvent être respectivement connectés dans un allume-cigare de véhicule pour y être alimentés, ledit adaptateur d'allume-cigare étant pourvu en plus d'au moins un circuit électronique primaire (46) aménagé dans son corps, connecté directement ou indirectement auxdits contacts, ledit adaptateur d'allume-cigare comprenant un composant d'antenne (30) en communication électrique avec ledit circuit électronique primaire qui tire principalement une source d'énergie desdits contacts,
**caractérisé en ce que**
ledit adaptateur d'allume-cigare comprend en outre un module d'identité d'abonné SIM (68) capable de recevoir une carte SIM et en communication électrique avec ledit circuit électronique primaire et un circuit émetteur-récepteur secondaire sans fil (61A) en communication électrique avec ledit circuit électronique primaire et capable de communiquer sans fil :
- le signal d'antenne,
- sa version traitée en mode électronique,
- des données tirées de son traitement électronique à un dispositif distant.

2. Adaptateur d'allume-cigare (2) selon la revendication 1, dans lequel une source d'énergie embarquée (16) est prévue comme substitution à la source d'énergie tirée des contacts (8, 10).

3. Adaptateur d'allume-cigare selon la revendication 1 ou la revendication 2, comprenant en outre un ou plusieurs circuits électroniques tertiaires (44) assurant au moins l'une des fonctions de gestion, de commande, de régulation, de commutation et de recharge d'énergie, dans lequel au moins l'un des circuits électroniques tertiaires est séparé du circuit électronique primaire (46) et des circuits électroniques secondaires (61A), mais en communication électrique avec au moins l'un de ceux-ci.

4. Adaptateur d'allume-cigare selon la revendication 3, lorsqu'elle dépend de la revendication 2, dans lequel au moins l'un des circuits électroniques tertiaires (44) est prévu pour assurer une fonction de recharge, ledit au moins un circuit électronique tertiaire étant en communication électrique avec lesdits deux contacts (8, 10) et ladite source d'énergie embarquée (16) et rechargeant celle-ci lorsqu'une source d'énergie est tirée à travers les contacts.

5. Adaptateur d'allume-cigare (2) selon l'une quelconque des revendications précédentes, dans lequel le circuit électronique primaire (46) est un circuit de traitement de protocole de télécommunications sans fil.

6. Adaptateur d'allume-cigare (2) selon la revendication 5, dans lequel le circuit électronique primaire (46) est un modem sans fil.

7. Adaptateur d'allume-cigare (2) selon l'une ou l'autre des revendications 5 et 6, dans lequel le circuit de traitement de protocole de communications sans fil (46) est adapté pour au moins l'un des protocoles de télécommunications sans fil suivants : GSM, GPRS, EDGE, HSDPA, CDMA, WCDMA, WiFi, WiMax.

8. Adaptateur d'allume-cigare (2) selon l'une quelconque des revendications précédentes, dans lequel la sortie de l'adaptateur d'allume-cigare est un câble en communication électrique directe ou indirecte avec ledit circuit électronique primaire (46).

9. Adaptateur d'allume-cigare (2) selon l'une quelconque des revendications précédentes, pourvu en outre d'une ou plusieurs DEL (48, 50) indicatives d'au moins l'une des situations suivantes : chargement d'une source d'énergie embarquée (16), existence d'une source d'énergie pour l'adaptateur d'allume-cigare à partir d'un allume-cigare de véhicule opérationnel et traitement de signaux dans le circuit électronique primaire (46) reçus par l'antenne (30).

10. Adaptateur d'allume-cigare (2) selon la revendication 9, dans lequel l'adaptateur d'allume-cigare est pourvu d'au moins deux DEL (48, 50), une première DEL fournissant une indication de l'existence d'une source d'énergie pour l'adaptateur d'allume-cigare et une seconde DEL pour fournir une indication du traitement de signaux reçus par l'antenne (30).

11. Adaptateur d' allume-cigare (2) selon la revendication 10, dans lequel les DEL (48, 50) sont de différentes couleurs.

12. Adaptateur d'allume-cigare (2) selon l'une quelconque des revendications précédentes, dans lequel l'antenne (30) est un composant sensiblement plat fixé à la surface interne d'une partie du corps (4A, 6A) de l'adaptateur d'allume-cigare.

13. Adaptateur d'allume-cigare (2) selon l'une quelconque des revendications précédentes, pourvu **en outre** d'ouvertures (4C, 6C) dans le corps (4A, 6A), à **travers** lesquelles peut s'échapper de l'air chaud généré à la suite du contact avec les circuits électroniques opérant à chaud.

14. Adaptateur d'allume-cigare (2) selon la revendication 13, dans lequel les ouvertures (4C, 6C) sont situées vers l'avant du corps proche de la portion de cylindre (4B, 6B) de l'adaptateur d'allume-cigare, ledit circuit électronique primaire (46) étant situé vers l'arrière du corps distant de la portion de cylindre et le ou lesdits circuits électroniques secondaires (20, 22, 24) étant également situé(s) vers l'avant du corps dudit adaptateur d'allume-cigare adjacent auxdites ouvertures.

15. Adaptateur d'allume-cigare selon la revendication 14, dans lequel le ou les circuits électroniques secondaires (20, 22, 24) est ou sont situés sur une paire de PCB (24, 26) disposés mutuellement adjacents à l'intérieur d'une portion avant du corps (4A, 6A) de l'adaptateur d'allume-cigare, chaque dit PCB étant en outre disposé à proximité d'une ouverture (4C, 6C) sur l'extérieur de l'adaptateur d'allume-cigare.

16. Adaptateur d'allume-cigare (2) selon l'une quelconque des revendications précédentes, dans lequel la sortie (58, 60) est une sortie sérielle choisie entre l'une des suivantes : un connecteur ou câble USB, un connecteur ou câble UART.

17. Adaptateur d'allume-cigare (2) selon l'une quelconque des revendications précédentes, dans lequel le circuit électronique primaire (46) est capable d'établir une connexion sans fil en utilisant au moins l'un d'un identifiant d'abonné (IMSI), d'un identifiant de modem (IMEI) et d'un identifiant d'un PND (PND UID).
